(19) Europäisches Patentamt
European Patent Office
Office européen des brevets

(11) Numéro de publication : **0 208 589 B1**

(12) # FASCICULE DE BREVET EUROPEEN

(45) Date de publication du fascicule du brevet : **23.01.91 Bulletin 91/04**

(51) Int. Cl.[5] : **H01G 9/02**, H01G 9/00

(21) Numéro de dépôt : **86401354.5**

(22) Date de dépôt : **20.06.86**

(54) **Cellule pour condensateur à double couche électrique, et procédé de fabrication d'une telle cellule.**

(30) Priorité : **25.06.85 FR 8509653**

(43) Date de publication de la demande : **14.01.87 Bulletin 87/03**

(45) Mention de la délivrance du brevet : **23.01.91 Bulletin 91/04**

(84) Etats contractants désignés : **AT BE CH DE FR GB IT LI NL**

(56) Documents cités :
**EP-A- 0 044 427**
**FR-A- 2 547 678**
**FR-A- 2 565 400**
**SOLID-STATE IONICS, vol. 6, no. 4, juillet 1982, pages 327-330, North-Holland Publishing Co., Amsterdam, NL; M.V. SUSIC et al.: "Protonic conductivity of solid UO2HPO4 - 3H2O"**

(73) Titulaire : **COMPAGNIE EUROPEENNE DE COMPOSANTS ELECTRONIQUES LCC**
**50, rue Jean -Pierre Timbaud B.P. 301**
**F-92402 Courbevoie (FR)**

(72) Inventeur : **Velasco, Gonzalo**
**THOMSON-CSF SCPI 19, Avenue de Messine**
**F-75008 Paris (FR)**
Inventeur : **Colomban, Philippe**
**THOMSON-CSF SCPI 19, Avenue de Messine**
**F-75008 Paris (FR)**
Inventeur : **Adet, Philippe**
**THOMSON-CSF SCPI 19, Avenue de Messine**
**F-75008 Paris (FR)**
Inventeur : **Pham, Thi Mai**
**THOMSON-CSF SCPI 19, Avenue de Messine**
**F-75008 Paris (FR)**

(74) Mandataire : **Ruellan-Lemonnier, Brigitte et al**
**THOMSON-CSF SCPI**
**F-92045 PARIS LA DEFENSE CEDEX 67 (FR)**

**EP 0 208 589 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une cellule pour condensateur à double couche électrique appelé couramment supercondensateur et un procédé de fabrication d'une telle cellule.

Depuis plusieurs années, les chercheurs ont étudié et mis au point des condensateurs à forte capacité utilisant le principe de la distribution de charges électriques à double couche. Selon ce principe étudié par Hermann VON HELMHOLZ, à l'interface électrode/électrolyte se forme une accumulation de particules chargées et/ou de dipoles électriques orientés. Cette accumulation est connue sous le nom de double couche électrique. La valeur élevée de la capacité de cette double couche provient de la grande quantité de charges électriques accumulées à l'interface par unité de surface, sous l'action d'une différence de potentiel.

Ces supercondensateurs ont un facteur de mérite (tension×capacité par unité de volume) dix à cinquante fois supérieur à celui des condensateurs électrochimiques actuels tels que les condensateurs à l'aluminium et au tantale. Ils sont donc particulièrement adaptés pour le stockage délocalisé de l'énergie dans les systèmes électroniques.

Les condensateurs basés sur ce principe sont constitués essentiellement par des particules d'un conducteur électronique en contact avec un électrolyte conducteur d'ions, l'électrolyte conducteur d'ions pouvant être soit un électrolyte liquide soit un électrolyte solide.

Dans le cas des condensateurs à double couche électrique à électrolyte liquide, une cellule élémentaire est constituée essentiellement de deux électrodes mixtes comportant chacune des particules d'un conducteur électronique, tel que le carbone activé, imbibées d'électrolyte, les deux électrodes étant séparées par une membrane perméable aux ions mais électriquement isolante. Cette membrane est, en générale, constituée par un polymère imbibé d'électrolyte qui peut être de l'acide sulfurique dilué. D'autre part, pour lier les grains de carbone et contenir l'électrolyte liquide, ceux-ci sont mélangés avec un polymère. Toutefois, les condensateurs utilisant un électrolyte liquide présentent des problèmes de fuites et ne supportent pas les surtensions. D'autre part, il est nécessaire d'utiliser un polymère pour contenir l'électrolyte liquide.

Les condensateurs à double couche électrique à électrolyte solide permettent de remédier à certains des inconvénients des condensateurs utilisant un électrolyte liquide. La cellule élémentaire des condensateurs à électrolyte solide actuellement connus est constituée par une électrode métallique et une électrode mixte constituée d'un mélange de particules d'un conducteur électronique et d'un électrolyte solide contenant un conducteur ionique, les deux électrodes étant séparées par une membrane constituée par ledit électrolyte solide. Cet électrolyte solide est choisi notamment parmi $RbAg_4I_5$ et $Rb_2\ Cu_8\ I_3\ Cl_7$. L'électrode métallique est alors réalisée en fonction de l'ion conducteur par de l'argent, du cuivre ou un composé à base de cuivre tel que $Cu^{2+}$ S. Dans ce cas, toutefois, la structure du condensateur est une structure polarisée et l'on observe des réactions parasites entre l'électrolyte et l'électrode métallique qui peuvent entrainer une destruction du condensateur. De plus, ces électrolytes solides présentent l'inconvénient d'avoir une tension de décomposition faible (<IV). Il est alors nécessaire d'associer en série un certain nombre de dispositifs élementaires pour obtenir la tension nécessaire à leur emploi.

EP-A-O 044 427 décrit un condensateur à double couche électrique à électrolyte solide, dont l'électrolyte est $K_xRb_{1-x}Cu_4I_yCl_{5-y}$, et x et y étant bien définis.

La présente invention a pour but de fournir un nouveau type de cellule pour condensateur à double couche électrique qui permet de remédier aux inconvénients ci-dessus.

En conséquence, la présente invention a pour objet une cellule d'un condensateur à double couche électrique selon la revendication 1.

L'électrolyte conducteur protonique solide doit présenter une conduction ionique la plus élevée possible associée à une conductivité électronique la plus faible possible. Conformément à la présente invention, cet électrolyte est choisi parmi le phosphate d'uranyle $H_3O\ UO_2\ PO_4{\cdot}3H_2O$, le zirconium-phosphate Zr $(HPO_4)_2\ nH_2O$, les dérivés de ces composés et les autres conducteurs protoniques à conductivité protonique élevée ($\sigma_{H^+}>10^{-4}\Omega^{-1}cm^{-1}$), ayant une conductivité électrique faible ($\sigma_e<10^{-7}\Omega^{-1}cm^{-1}$). On utilisera de préférence le phosphate d'uranyle $H_3O\ UO_2\ PO_4{\cdot}3H_2O$ désigné habituellement par le terme HUP, car cet électrolyte est un très bon conducteur protonique très bien adapté à la réalisation de condensateur à forte capacité.

La conductivité de ce matériau est supérieure (à la température ambiante par exemple) de plus de deux ordres de grandeur par rapport à celle des matériaux électrolytes solides -ou rendus solides par polymérisation - pouvant être mis en oeuvre en couche fine en contact avec une poudre à base de carbone. Il s'ensuit une résistance série bien inférieure à celle de dispositifs réalisables avec ces autres matériaux (polymère retenant un sel ionique par exemple).

De plus, la conductivité électronique d'un électrolyte solide protonique tel que HUP ou Zr $(HPO_4)_2\ nH_2O$

est remarquablement faible, à savoir $<10^{-9}\Omega^{-1}cm^{-1}$, notamment par rapport à celle des polymères organiques contenant un sel ionisable, ce qui est une garantie d'une faible auto-décharge du condensateur.

D'autre part, les particules de conducteur électronique doivent être telles qu'elles permettent d'obtenir une interface maximale entre les particules et l'électrolyte. De plus, elles doivent présenter une conductivité électronique la plus élevée possible (associée à une conductivité ionique faible). En conséquence, les particules de conducteur électronique seront formées de noir de carbone activé, de noir d'acétylène, de mélange de différents noirs de carbone, de noir de carbone et de noir d'acétylène ou de produits équivalents.

De plus, l'électrolyte conducteur protonique constituant la membrane ou séparateur ionique peut être de nature différente de celui constituant le mélange dans les électrodes.

Selon d'autres caractéristiques de la présente invention, la membrane est constituée par une membrane organique échangeuse des espèces protonées. Elle peut être réalisée à l'aide d'une structure poreuse imbibée avec un électrolyte.

Selon une autre caractéristique de la présente invention, les ions $H_3O^+$ des conducteurs protoniques peuvent être substitués totalement ou en partie par un cation présentant une conductivité élevée tel que $Na^+$, $Li^+$, $K^+$, $Ca^{2+}$, $Cu^{2+}$, $Ag^+$. Cette substitution permet de déplacer les températures des transitions, de lisser leurs effets et de faire fonctionner le condensateur à des basses températures. Cette substitution peut être réalisée dans le matériau de la membrane, de l'électrode ou des deux. Une caractéristique très importante des électrolytes solides cristallisés est le fait que seuls les cations conducteurs peuvent se déplacer sous l'action de la différence de potentiel. Cet avantage est décisif par rapport aux matériaux retenant un sel alcalin ionisable $M^+X^-$ comme par exemple les polymères, car la présence simultanée de cations et d'anions augmente fortement le courant de fuite et la résistance série.

Selon une caractéristique supplémentaire, pour éviter la déshydratation de HUP possible au-dessus de 80°C, la cellule est, de préférence, enrobée dans un matériau assurant l'étanchéité.

La présente invention concerne aussi un procédé de fabrication d'une telle cellule pour condensateur à double couche électrique.

Ce procédé est caractérisé par les étapes suivantes :

- réalisation de la poudre pour électrodes mixtes,
- réalisation de la poudre pour membrane,
- préformation de la membrane par pressage,
- frittage simultané des deux électrodes et de la membrane,
- mise en place des terminaisons métalliques,
- encapsulation et formation électrique préalable.

Selon un mode de réalisation préférentiel, la poudre pour électrodes mixtes est obtenue par double percolation du conducteur électronique et de l'électrolyte solide sous forme de poudres, la préparation se faisant dans la solution aqueuse elle-même lors d'un mélange, à température donnée pendant un temps déterminé, des réactifs pour obtenir un précipité d'électrolyte ayant en son sein le conducteur électronique, car le conducteur électronique est dans des proportions déterminées pour obtenir le seuil de percolation conduisant à la résistivité la plus faible et à la capacité la plus forte. La précipitation est suivie d'opérations de lavage, de filtrage, de séchage et de broyage.

Il s'ensuit que le mélange intime des deux matériaux (électrolyte solide, conducteur électronique) existe à l'échelle microscopique. Selon les conditions l'un et l'autre doivent s'envelopper mutuellement, porosité y compris tout en laissant la double percolation possible.

D'autre part, lorsque l'électrolyte est constitué par $H_3O\ UO_2\ PO_4{\cdot}3H_2O$ ou HUP, la poudre de HUP est obtenue en faisant précipiter à température ambiante, en milieu aqueux et sous agitation permanente pendant une période de 2 à 10 heures, un mélange équimolaire de deux solutions de nitrate d'uranyle et d'acide phosphorique.

D'autres caractéristiques et avantages de la présente invention apparaitront à la lecture de la description de plusieurs modes de fabrication de la cellule, faite avec référence aux dessins ci-annexés dans lesquels :

- la figure 1 est une vue en coupe d'une cellule pour condensateur à double couche électrique conforme à la présente invention,
- la figure 2 est un diagramme donnant les principales étapes de fabrication d'une cellule dans le cas où l'électrolyte est HUP.
- les figures 3a à 3c sont différentes courbes donnant l'évolution de la résistivité électronique de l'électrode mixte, de la résistance série et de la capacité à 1 Hz de deux condensateurs conformes à la présente invention en fonction du pourcentage de noir de carbone dans l'électrode mixte.
- les figures 4, 5, 6, 7 représentent respectivement la courbe de charge à I = 1mA, la courbe de décharge sur différentes résistances, la variation du courant de fuite en fonction de la température pour deux condensateurs conformes à la présente invention ainsi que le déplacement de la courbe C = f(t) en fin de dopage dans le cas d'un condensateur HUP à électrodes en CORAX dopé $Na^+$.

Sur la figure 1 on a représenté schématiquement une vue en coupe d'une cellule pour condensateur à double couche électrique conforme à la présente invention.

Cette cellule est constituée essentiellement de deux électrodes 1, 2 séparées par une membrane 3 perméable aux ions mais isolante vis-à-vis des électrons. La menbrane 3 est constituée par un solide contenant un électrolyte solide conducteur protonique en totalité ou en partie si les grains de l'électrolyte percolent.Cet électrolyte est choisi parmi le phosphate d'uranyle $H_3O\ UO_2\ PO_4 \cdot 3H_2O$, le zirconium-phosphate $Zr\ (HPO_4)_2\ nH_2O$, les dérivés de ces composés ou les autres conducteurs protoniques à conductivité protonique élevée ($\sigma_{H^+} > 10^{-4} \Omega^{-1} cm^{-1}$) ayant une conductivité électronique faible ($\sigma_e < 10^{-7} \Omega^{-1} cm^{-1}$). On utilisera, de préférence phosphate d'uranyle appelé HUP, qui est un hydrate à structure lamellaire comprenant une couche d'eau protonée prise en sandwich entre deux couches $(UO_2\ PO_4)n$. La conductivité de HUP est fortement anisotrope et, en fonction du taux d'orientation des cristallites dans le matériau, la conductivité ionique varie entre $5\ 10^{-4}$ et $5\ 10^{-3} \Omega^{-1}\ cm^{-1}$ à 20°C et la conductivité électronique est inférieure à $10^{-9} \Omega^{-1}\ cm^{-1}$.

La membrane peut aussi être une membrane organique échangeuse des espèces protonées. Elle peut être réalisée par une structure poreuse imbibée avec un électrolyte.

D'autre part, les deux électrodes 1,2 sont des électrodes mixtes constituées par un mélange d'au moins un conducteur électronique et d'au moins un électrolyte solide. Cet électrolyte solide peut être différent de ou identique à celui constituant la membrane, mais choisi parmi ceux mentionnés ci-dessus. Le conducteur électronique doit présenter une conductivité électrique élevée. Le conducteur électronique est en général constitué par du noir de carbone activé, plus particulièrement le noir de carbone activé vendu sous la marque CORAX LX6 qui présente une surface spécifique de 265 $m^2/g$ avec une taille des grains d'environ 180 Å ou le noir de carbone activé vendu sous la marque NORIT RB6 qui présente une surface spécifique de 1150 $m^2/g$ avec une taille des grains comprise entre 10 et 50 µm.

Des composés équivalents tels que le noir d'acétylène peuvent aussi être utilisés.

En fait, la grande finesse des poudres utilisées et/ou leur grande surface permettent d'obtenir une interface maximale entre la poudre conductrice électronique et l'électrolyte et en conséquence une forte capacité par unité de volume.

Comme représenté sur la figure 1, deux terminaisons métalliques 4, 5 sont fixées sur les électrodes mixtes 1 et 2. Ces terminaisons 4, 5 sont réalisées en un matériau bon conducteur de l'électricité tel que le cuivre. D'autre part, l'ensemble des éléments ci-dessus est enrobé dans un matériau isolant tel que l'araldite pour assurer une bonne étanchéité.

On obtient donc ainsi une structure entièrement solide, symétrique et non polarisée.

On décrira maintenant, en se référant au diagramme de la figure 2, un procédé de fabrication d'une cellule conforme à la présente invention. Ce procédé est décrit dans le cas où l'électrolyte solide utilisé est HUP et le conducteur électronique du noir de carbone. Toutefois, un procédé similaire peut être utilisé avec les autres électrolytes mentionnés ci-dessus.

Conformément à la présente invention, on prépare tout d'abord l'électrolyte HUP sous forme de poudre. La poudre de HUP est synthétisée par précipitation à température ambiante, à savoir à une température d'environ 25°C, en milieu aqueux, à partir d'un mélange équimolaire de deux solutions de 2, 3 moles de nitrate d'uranyle $(UO_2\ (NO_3)_2\ 6H_2O)$ et d'acide phosphorique $(H_3\ PO_4)$. Une agitation permanente pendant une période de 2 à 10 heures conduit à la précipitation du composé. Eventuellement, on peut ajouter au mélange des deux solutions, une solution ionique telle que NaOH, $NaNO_3$,NaCl, KCl, LiCl..., qui permet de substituer totalement ou partiellement les ions $H_3O^+$ par des cations $Na^+$, $K^+$,$Li^+$ présentant une bonne conductivité ionique. On obtient ainsi un déplacement de la température de la transition de HUP et un abaissement de la variation de conductivité associée à cette transition comme représenté sur les figures 7 (a) et (b) qui donnent le cas où HUP contient 10% de $Na^+$. D'autres solutions ioniques telles que celles contenant $Ca^{2+}$, $Cu^{2+}$ ou $Ag^+$ peuvent aussi être envisagées. On peut aussi utiliser un mélange des solutions ci-dessus. Le précipité ainsi obtenu est séparé de la solution mère par décantation puis lavé rapidement une fois avec une solution d'acide phosphorique $H_3PO_4$ présentant un pH de 2 puis deux ou trois fois avec de l'eau distillée. Le précipité est ensuite filtré sur un verre fritté. La poudre ainsi obtenue dont la taille des grains peut varier entre 4 µm et 50 µm selon les conditions adoptées, est équilibrée à l'air ambiant présentant entre 60% et 80% d'humidité pendant environ 24 heures puis désagrégée au moyen d'un mortier par exemple. Si nécessaire, la poudre ainsi obtenu peut être stockée en flacons fermés. Les caractéristiques de la poudre HUP utilisée pour la fabrication du séparateur et de l'électrode mixte sont données dans le tableau 1 ci-après.

TABLEAU 1

Caractéristique de la poudre HUP utilisée pour la fabrication du séparateur et de l'électrode mixte.

Couleur :jaune pâle
Granulométrie : 4×5×0,2μm³
Stabilité chimique :PH > 2, O,014 M < $\Sigma PO_4^{3-}$ < 6,1 M
Stabilité thermique :T° < 100°C

On prépare simultanément les électrodes mixtes constituées dans le mode de fabrication décrit par un mélange de HUP et de noir de carbone activé tel que le CORAX LX6 ou le NORIT RB6 comme mentionné ci-dessus. Pour améliorer les propriétés électriques et chimiques du noir de carbone, on le soumet à un traitement thermique. Ainsi, en le chauffant à 400°C pendant une nuit sous atmosphère d'argon ou pendant 2 heures sous vide, on diminue le courant de fuite en-dessous de 2μA. D'autre part, ce traitement thermique conduit à une amélioration du frittage de l'électrode mixte pendant la mise en forme.

Ensuite pour obtenir la poudre de l'électrode mixte, le noir de carbone, fraichement traité thermiquement, est dispersé dans la solution aqueuse de $UO_2$ $(NO_3)_2$ $6H_2O$ avant l'ajout d'acide phosphorique. Le mélange est ensuite effectué comme pour l'électrolyte. Le précipité obtenu est alors soumis à des opérations de lavage, de filtrage et de séchage identiques à celles mises en oeuvre pour l'obtention de l'électrolyte. Les proportions relatives de noir de carbone et de HUP sont déterminées expérimentalement afin d'obtenir le seuil de percolation conduisant à la résistivité la plus faible et la capacité la plus forte. Ainsi, dans le cas du NORIT la proportion en poids optimale sera de 10/90 et dans le cas du CORAX, elle sera de 5/95 comme on peut le voir sur les courbes de la figure 3.

Les caractéristiques du noir de carbone activé utilisé dans la fabrication des électrodes mixtes ainsi que la composition de l'électrode mixte sont données dans les tableaux 2 et 3 ci-après.

TABLEAU 2.

Caractéristiques du noir de carbone activé utilisé dans la fabrication des électrodes mixtes.

| | Corax L6 | Norit SB |
|---|---|---|
| Couleur | Noir | Noir |
| Surface spécifique | 265 $m^2/g$ | 1150 $m^2/g$ |
| Granulométrie (grosseur moyenne des grains) | 18 nm | 10 μm |
| Densité | 120 g/l | 290 g/l |
| Teneur en cendre | 0,2 % | 5 % |
| PH | 7,5 | 6,8 |

Le noir de Carbone Corax L6 est fabriqué par Degussa-France et le Norit SB par Norit Incorporation.

TABLEAU 3

Composition de l'électrode mixte.

| Matériaux d'électrode | Condensateur | Condensateur |
|---|---|---|
| Charbon actif | (Corax L6) 5-6% | Norit 10-12 % |
| Electrolyte solide | 95 % - 94 % | 90 % - 88 % |
| Agent de dispersion | aucun | aucun |
| Couleur | noir | jaune-gris |

Avant leur utilisation pour la fabrication d'une cellule élémentaire, les poudres d'HUP et d'électrodes mixtes sont rebroyées finement au mortier, par exemple, pendant plusieurs minutes. Cette opération est nécessaire pour obtenir ultérieurement un bon frittage. On réalise ensuite la préformation de la membrane. Cette préformation est nécessaire pour éviter la diffusion du carbone dans la membrane et obtenir ainsi une membrane électriquement isolante. La précompaction de la membrane qui peut être constituée, dans le mode de réalisation mis en oeuvre, de 130 mg de HUP pur, est effectué à 300 $Kg/cm^2$ pendant 5 mn. On introduit alors dans un moule successivement 160 mg du mélange constitutif de l'électrode inférieure qui est réparti uniformément, la membrane précompactée puis 160 mg du mélange constitutif de l'électrode supérieure. L'ensemble est pressé à $2t/cm^2$ pendant 1 heure. Il est important de réaliser le frittage des deux électrodes et de la membrane ensemble, car on obtient entre les éléments une interface chimique entraînant une diminution de la résistance série. Cette interface est dûe au fait que les poudres, lors du frittage, subissent une dissolution et une recristallisation aux points de contact entre elles. Dans le cas où les frittages des électrodes et de la membrane sont réalisés séparément, l'interface est uniquement physique et la résistance série est augmentée d'au moins un ordre de grandeur. On obtient ainsi une pastille de 0,75 $cm^2$ pour une épaisseur de 0,2 cm.

Ensuite, les terminaisons métalliques qui peuvent être constituées par deux plaques de cuivre sont disposées de chaque côté de la pastille et collées par une colle époxy chargée en cuivre polymérisant à la température ambiante. De préférence, cette opération est effectuée sous une légère pression. L'ensemble est ensuite enrobé dans une couche épaisse d'araldite afin d'obtenir une bonne étanchéité. Il est évident pour l'homme de l'art que d'autres matériaux peuvent être employés pour les terminaisons, la colle et l'enrobage sans sortir du cadre de l'invention.

On réalise alors la formation électrique de la cellule enrobée en la soumettant à une tension de IV à une température de 50° C. Le temps de formation dépend de la température. La pression et le temps de pressage peuvent être modifiés. Une pression plus forte permet de diminuer le temps de pressage. Cette opération améliore fortement la qualité du contact entre critallites de HUP et grains de carbone. Ainsi pour le NORIT la capacité passe de 0,4 F à 0,9 F et de 0,176 F à 0,2 F pour le CORAX.

D'autre part, la figure 4 montre la courbe de charge effectuée à courant constant I = 1mA et à température ambiante pour les condensateurs de types Norit et Corax, la figure 5 la décharge sur différents types de résistances (10, 100, 472 kΩ et 1MΩ), le condensateur étant chargé à IV et la figure 6, la variation du courant de fuite en fonction de la température pour un condensateur de type Norit.

Les caractéristiques typiques d'un condensateur conforme à la présente invention sont (à 20°C) :

. Capacité continue 0,2 à 1F

. Résistance série équivalente ≤ 50Ω

. Résistance de fuite mesurée à IV Rf = 5 x $10^5$Ω.

D'autre part, ces condensateurs présentent une très bonne résistance aux chocs mécaniques et aux vibrations, une longue durée de vie et un faible coût. De plus, ils sont réalisables sous forme de couches minces (< 100µ) ou épaisses (> 500µ).

Pour bien montrer, les avantages du condensateur à double couche électrique de la présente invention par rapport aux condensateurs de même type actuellement sur le marché, on a réalisé une comparaison des performances en courant continu de certains d'entre eux. Les résultats de cette comparaison sont donnés dans le tableau ci-après.

TABLEAU 4

| Cellule | $C/RbAg_4I_5/$ Ag | $C/H_2SO_4/C$ | $C/Rb_2CuI_3Cl_7/$ Cu ou $Cu^{2+}S$ | C/HUP/C |
|---|---|---|---|---|
| | Solide | Liquide | Solide | Solide |
| Tension (V) | 0,66 | $3 \times 1{,}66^{+}$ | 1,6 | 2 |
| Capacité (F) | 5 | 1 | 1 | ~1 |
| Densité d'énergie ($J/cm^3$) | 1,27 | 0,5 | 1,3 | 6 |
| Courant de fuite ($\mu A$) | 6,6 | 120 | 5 | < 2 |
| Courant de fuite C.V (sec) | $2\ 10^{-6}$ | $24\ 10^{-6}$ | $3{,}1\ 10^{-6}$ | $2{,}5\ 10^{-6}$ |
| Gamme de température de stockage | 300 - 343 | 248 - 343 | 263 - 343 | 230 - 340 |

+3 cellules dans le dispositif

On a décrit un procédé de fabrication d'une cellule dans le cas où l'électrolyte solide est HUP. Toutefois, le même procédé peut être utilisé avec les autres électrolytes, seules changeront certaines conditions de mise en oeuvre telles que le seuil de percolation, les températures de formation ou similaires.

D'autre part, il est évident pour l'homme de l'art que plusieurs cellules telles que décrites ci-dessus peuvent être assemblées de manière connue pour obtenir un condensateur de capacité voulue.

**Revendications**

1. Cellule d'un condensateur à double couche électrique comportant un séparateur entre deux électrodes, les électrodes (1, 2) étant des électrodes mixtes constituées par un mélange de particules d'au moins un conducteur électronique et d'au moins un électrolyte solide caractérisée en ce que le séparateur (3) comprend un électrolyte solide conducteur protonique qui présente une conductivité protonique supérieure à $10^{-4}\ \Omega^{-1}\cdot cm^{-1}$ et une conductivité électrique inférieur à $10^{-7}\Omega^{-1}\cdot cm^{-1}$.

2. Cellule selon la revendication 1, caractérisée en ce que l'électrolyte solide (3) est un conducteur protonique choisi parmi le phosphate d'uranyle $H_3O\ UO_2\ PO_4\cdot 3H_2O$, le zirconium-phosphate $Zr\ (HPO_4)_2\ nH_2O$, les dérivés de ces composés et les autres conducteurs protoniques à conductivité protonique élevée ayant une faible conductivité électronique.

3. Cellule selon la revendication 2, caractérisée en ce que les ions $H_3O^+$ sont substitués totalement ou en partie par un cation.

4. Cellule selon la revendication 3, caractérisée en ce que le cation est choisi parmi $Na^+$, $Li^+$, $K^+$, $Ca^{2+}$, $Cu^{2+}$, $Ag^+$.

5. Cellule selon la revendication 1, caractérisée en ce que le conducteur électronique est constitué par du noir de carbone activé, du noir d'acétylène ou des mélanges de différents noirs de carbone et/ou noir d'acétylène.

6. Cellule selon l'une quelconque des revendications 1 à 5, caractérisée en ce que l'électrolyte conducteur protonique compris dans le séparateur (3) est de nature différente de celui constituant le mélange dans les électrodes.

7. Cellule selon l'une quelconque des revendications 1 à 6, caractérisée en ce que le séparateur (3) est constitué à partir d'une membrane organique.

8. Cellule selon l'une quelconque des revendications 1 à7, caractérisée en ce que le séparateur (3) est réalisé à l'aide d'une structure poreuse imbibée avec un électrolyte.

9. Cellule selon l'une quelconque des revendications 1 à 8, caractérisée en ce que des terminaisons métalliques (4,5) sont montées sur les électrodes.

10. Cellule selon l'une quelconque des revendications 1 à 9, caractérisée en ce qu'elle est encapsulée dans un matériau isolant (6).

11. Procédé de fabrication d'une cellule selon l'une quelconque des revendications 1 à 10, caractérisé en ce qu'il comporte les étapes suivantes :

- réalisation de la poudre pour électrodes mixtes (1,2),
- réalisation de la poudre pour séparateur (3),
- préformation du séparateur par pressage,
- frittage simultané des deux électrodes et du séparateur,
- mise en place des terminaisons métalliques (4,5),
- encapsulation et formation électronique préalable (6).

12. Procédé selon la revendication 11, caractérisé en ce que la poudre pour électrodes mixtes est obtenue par double percolation du conducteur électronique et de l'électrolyte solide sous forme de poudres, la préparation se faisant dans la solution aqueuse elle-même, lors d'un mélange à température donnée pendant un temps déterminé des réactifs pour obtenir un précipité d'électrolyte ayant en son sein le conducteur électronique.

13. Procédé selon la revendication 12, caractérisé en ce que les proportions de poudres d'électrolyte solide et de conducteur électronique sont déterminées afin d'obtenir le seuil de percolation conduisant à la résistivité minimale et à la capacité maximale.

14. Procédé selon la revendication 12, caractérisé en ce que le conducteur électronique en poudre est préalablement traité thermiquement.

15. Procédé selon l'une quelconque des revendications 11 à 14, caractérisé en ce que le précipité est ensuite soumis à des opérations de lavage, de filtrage, de séchage et de broyage.

16. Procédé selon la revendication 11, caractérisé en ce que, dans le cas où l'électrolyte est constitué par $H_3O\ UO_2PO_4{\cdot}3H_2O$, la poudre de $H_3O\ UO_2PO_4{\cdot}3H_2O$ est obtenue en faisant précipiter à température ambiante, en milieu aqueux et sous agitation permanente pendant une période de 2 à 10 heures un mélange équimolaire de deux solutions de nitrate d'uranyle et d'acide phosphorique.

## Ansprüche

1. Zelle für einen Kondensator mit elektrischer Doppelschicht, mit einem Trenner zwischen zwei gemischten Elektroden (1, 2), die ein Gemisch von Teilchen wenigstens eines elektronischen Leiters und wenigstens eines Festkörperelektrolyten umfassen, dadurch gekennzeichnet, daß der Trenner (3) einen protonenleitenden Festkörperelektrolyten umfaßt, der eine spezifische Protonenleitfähigkeit, die oberhalb von $10^{-4}\ \Omega^{-1}cm^{-1}$ liegt, und eine spezifische elektrische Leitfähigkeit, die unterhalb von $10^{-7}\Omega^{-1}cm^{-1}$ liegt, aufweist.

2. Zelle gemäß Anspruch 1, dadurch gekennzeichnet, daß der Festkörperelektrolyt (3) ein Protonenleiter ist, der aus dem Phosphat der Uranylgruppe $H_3O\ UO_2PO_4{\cdot}3H_2O$, dem Zirkoniumphosphat $Zr(HPO_4)2{\cdot}nH_2O$, der Derivate dieser Verbindungen und der anderen Protonenleiter mit erhöhter spezifischer Protonenleitfähigkeit, die eine schwache elektronische Leitfähigkeit besitzen, ausgewählt wird.

3. Zelle gemäß Anspruch 2, dadurch gekennzeichnet, daß die $H_3O^+$-Ionen vollständig oder teilweise durch ein Kation ersetzt werden.

4. Zelle gemäß Anspruch 3, dadurch gekennzeichnet, daß das Kation aus $Na^+$, $Li^+$, $K^+$, $Ca^{2+}$, $Cu^{2+}$ und $Ag^+$ ausgewählt wird.

5. Zelle gemäß Anspruch 1, dadurch gekennzeichnet, daß der elektronische Leiter aktivierten Kohlenstoffruß, Acetylenruß oder Gemische aus verschiedenen Arten von Kohlenstoffruß und/oder Acetylenruß aufweist.

6. Zelle gemäß einem der Ansprüche 1 bis 5, dadurch gekennzeichnet, daß der im Trenner (3) enthaltene protonenleitende Elektrolyt von anderer Art ist als der das Gemisch der Elektroden bildende Elektrolyt.

7. Zelle gemäß einem der Ansprüche 1 bis 6, dadurch gekennzeichnet, daß der Trenner (3) aus einer organischen Membran gebildet wird.

8. Zelle gemäß einem der Ansprüche 1 bis 7, dadurch gekennzeichnet, daß der Trenner (3) mit Hilfe einer porösen Struktur, die mit einem Elektrolyten getränkt ist, verwirklicht wird.

9. Zelle gemäß einem der Ansprüche 1 bis 8, dadurch gekennzeichnet, daß die metallischen Endpunkte (4, 5) an den Elektroden angebracht sind.

10. Zelle gemäß einem der Ansprüche 1 bis 9, dadurch gekennzeichnet, daß sie in einem Isoliermaterial (6) eingekapselt wird.

11. Verfahren zur Herstellung einer Zelle gemäß einem der Ansprüche 1 bis 10, dadurch gekennzeichnet, daß es die folgenden Schritte umfaßt:

- Herstellung des Pulvers für die gemischten Elektroden (1, 2),
- Herstellung des Pulvers für den Trenner (3),
- Vorformung des Trenners durch Pressung,
- gleichzeitiges Sintern der zwei Elektroden und des Trenners,
- Einsetzen der metallischen Endpunkte (4, 5),
- Einkapselung und elektronische Vorformierung (6).

12. Verfahren gemäß Anspruch 11, dadurch gekennzeichnet, daß das Pulver für die gemischten Elektroden durch doppelte Perkolation des in Pulverform vorliegenden elektronischen Leiters und des in Pulverform vorliegenden Festkörperelektrolyten erhalten wird, wobei die Aufbereitung in der wässrigen Lösung selbst während des Mischens der Reagenzien bei gegebener Temperatur und vorbestimmter Dauer geschieht, um einen elektrolytischen Niederschlag zu erhalten, der den elektronischen Leiter in seinem Inneren enthält.

13. Verfahren gemäß Anspruch 12, dadurch gekennzeichnet, daß die Anteile der Pulver des Festkörperelektrolyten und des elektronischen Leiters so bestimmt werden, daß die Perkolationsstufe erhalten wird, die zu einem minimalen spezifischen elektrischen Widerstand und zu einer maximalen Kapazität führt.

14. Verfahren gemäß Anspruch 12, dadurch gekennzeichnet, daß der pulverförmige elektronische Leiter im voraus thermisch behandelt wird.

15. Verfahren gemäß einem der Ansprüche 11 bis 14, dadurch gekennzeichnet, daß der Niederschlag anschließend Spülungs-, Filterungs-, Trocknungs- und Zerkleinerungsarbeitsvorgängen unterworfen wird.

16. Verfahren gemäß Anspruch 11, dadurch gekennzeichnet, daß für den Fall, daß der Elektrolyt durch $H_3O\ UO_2\ PO_4{\cdot}3H_2$gebildet wird, das $H_3O\ UO_2\ PO_4{\cdot}3H_2O$-Pulver erhalten wird, indem es bei Raumtemperatur in wäßriger Lösung und unter ständigem Schütteln während eines Zeitintervalls zwischen zwei und zehn Stunden aus einem äquimolaren Gemisch aus zwei Lösungen des Nitrats der Uranylgruppe und aus Phosphorsäure ausgefällt wird.

## Claims

1. A capacitor cell with a double electric layer, comprising a separator between two electrodes, the electrodes (1 and 2) being mixed electrodes constituted by a mixture of particles of at least one electron conductor and at least one solid electrolyte, characterized in that the separator (3) comprises a proton conductor solid electrolyte which has a proton conductivity greater than $10^{-4}\ \Omega^{-1}{\cdot}cm^{-1}$ and an electrical conductivity less than $10^{-7}\Omega^{-1}{\cdot}cm^{-1}$.

2. The cell as claimed in claim 1, characterized in that the solid electrolyte (3) is a proton conductor selected from the group : uranyl phosphate $H_3O\ UO_2\ PO_4{\cdot}3H_2O$, zirconium phosphate $Zr\ (HPO_4)_2\ nH_2O$, derivatives of these compounds and other proton conductors having a high proton conductivity and a low electron conductivity.

3. The cell as claimed in claim 2, characterized in that the $H_3O^+$ ions are totally or partly replaced by a cation.

4. The cell as claimed in claim 3, characterized in that the cation is selected from the group : $Na^+$, $Li^+$,

$K^+$, $Ca^{2+}$, $Cu^{2+}$ and $Ag^+$.

5. The cell as claimed in claim 1, characterized in that the electron conductor is constituted by activated carbon black, acetylene black or mixtures of different carbon blacks and/or acetylene blacks.

6. The cell as claimed in any one of the preceding claims 1 through 5, characterized in that the proton conductor electrolyte comprised in the separator (3) has a nature different to that of the one constituting the mixture in the electrodes.

7. The cell as claimed in any one of the preceding claims 1 through 6, characterized in that the separator (3) is produced starting with an organic membrane.

8. The cell as claimed in any one of the preceding claims 1 through 7, characterized in that the separator (3) is produced in the form of a porous structure impregnated with an electrolyte.

9. The cell as claimed in any one of the preceding claims 1 through 8, characterized in that metallic terminals (4 and 5) are mounted on the electrodes.

10. The cell as claimed in any one of the preceding claims 1 through 9, characterized in that it is encapsulated in an insulating material (6).

11. A method of producing a cell as claimed in any one of the preceding claims 1 to 10, characterized in that it comprises the following stages :

- the production of the powder for the mixed electrodes (1 and 2),
- the production of the powder for the separator (3),
- preforming the separator by pressing,
- simultaneous fritting of the two electrodes and of the separator,
- placement of the metallic terminals (4 and 5), and
- encapsulation and preliminary electronic forming (6).

12. The method as claimed in claim 11, characterized in that the powder for mixed electrodes is obtained by double liquid treatment of the electron conductor and of the solid electrolyte in the form of powders, the preparation being performed in the aqueous solution itself at the time of mixing at a given temperature during a predetermined time of the reactants in order to obtain an electrolyte precipitate having the electron conductor within it.

13. The method as claimed in claim 12, characterized in that the proportions of the solid electrolyte powder and of the electron conductor powder are set in order to obtain a liquid treatment leading to minimum specific resistance and maximum capacity.

14. The method as claimed in claim 12, characterized in that the powder electron conductor is previously heat treated.

15. The method as claimed in any one of the preceding claims 1 through 14, characterized in that the precipitate is then submitted to washing, filtering, drying and comminution operations.

16. The method as claimed in claim 11, characterized in that when the electrolyte is constituted by $H_3O\ UO_2PO_4{\cdot}3H_2O$, the $H_3O\ UO_2PO_4{\cdot}3H_2O$ powder is obtained by precipitation of an equimolar mixture of two solutions of uranyl nitrate and phosphoric acid at the ambient temperature in an aqueous environment and with constant agitation for 2 to 10 hours.

FIG_1

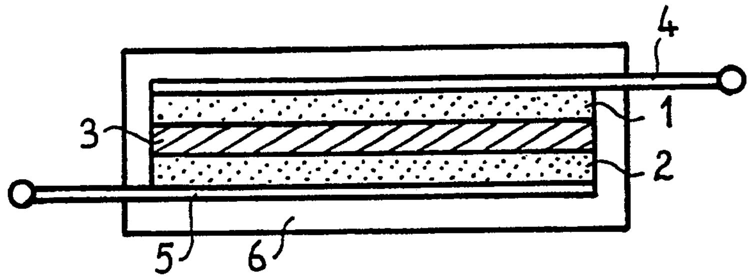


FIG_3-a

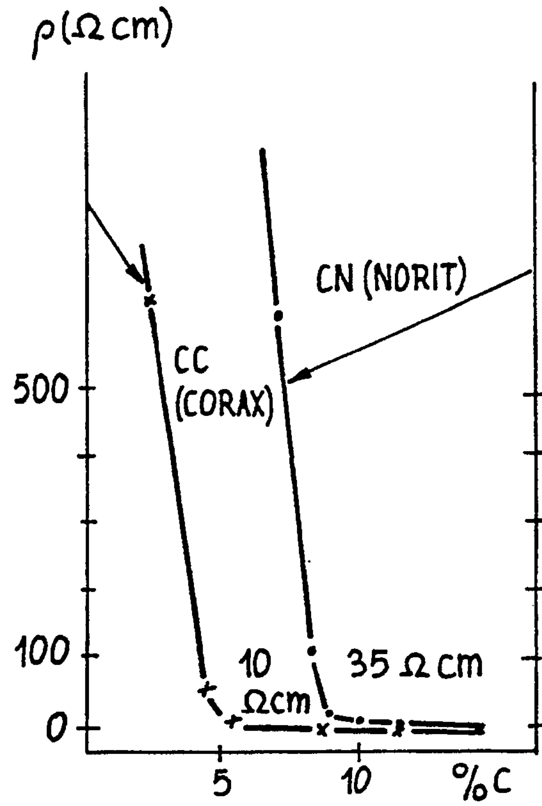


FIG_3-b

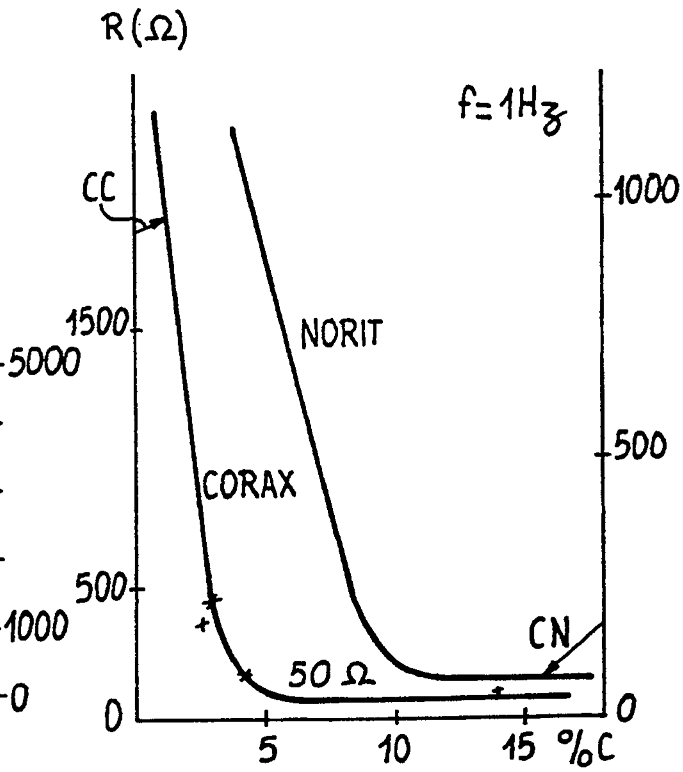


FIG_3-c

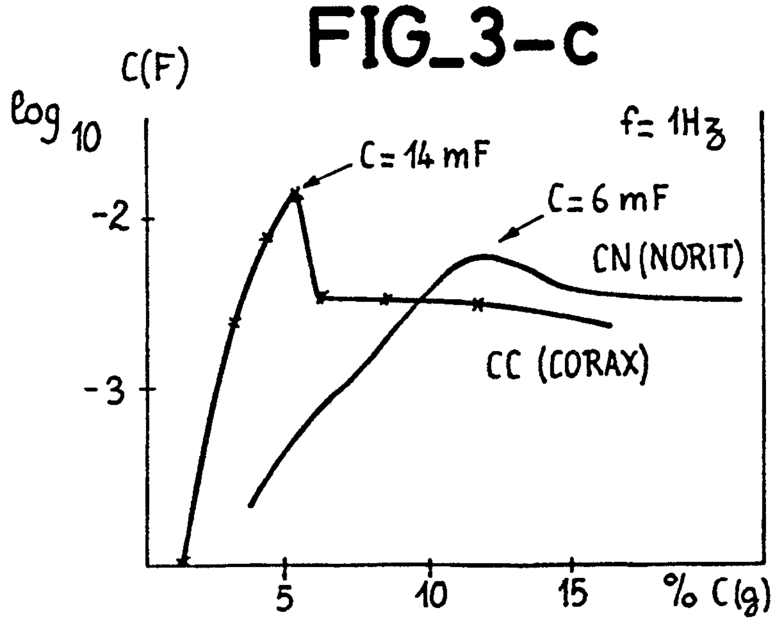

FIG_2

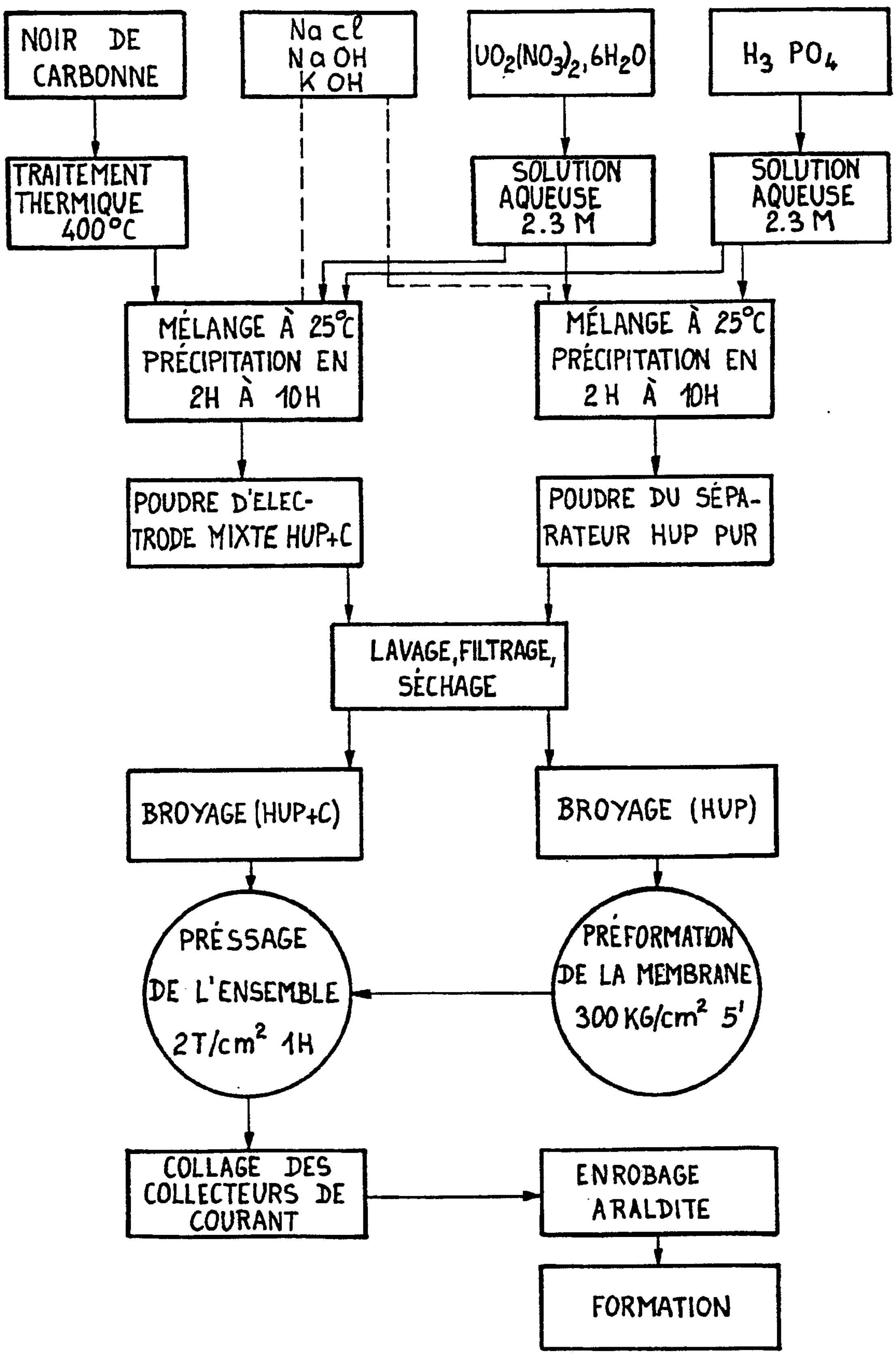
NOIR DE CARBONNE
Na cl
Na OH
K OH
UO2(NO3)2,6H2O
H3 PO4
TRAITEMENT THERMIQUE 400°C
SOLUTION AQUEUSE 2.3 M
SOLUTION AQUEUSE 2.3 M
MÉLANGE À 25°C PRÉCIPITATION EN 2H À 10H
MÉLANGE À 25°C PRÉCIPITATION EN 2H À 10H
POUDRE D'ELECTRODE MIXTE HUP+C
POUDRE DU SÉPARATEUR HUP PUR
LAVAGE, FILTRAGE, SÉCHAGE
BROYAGE (HUP+C)
BROYAGE (HUP)
PRÉSSAGE DE L'ENSEMBLE 2T/cm2 1H
PRÉFORMATION DE LA MEMBRANE 300 KG/cm2 5'
COLLAGE DES COLLECTEURS DE COURANT
ENROBAGE ARALDITE
FORMATION

FIG_4

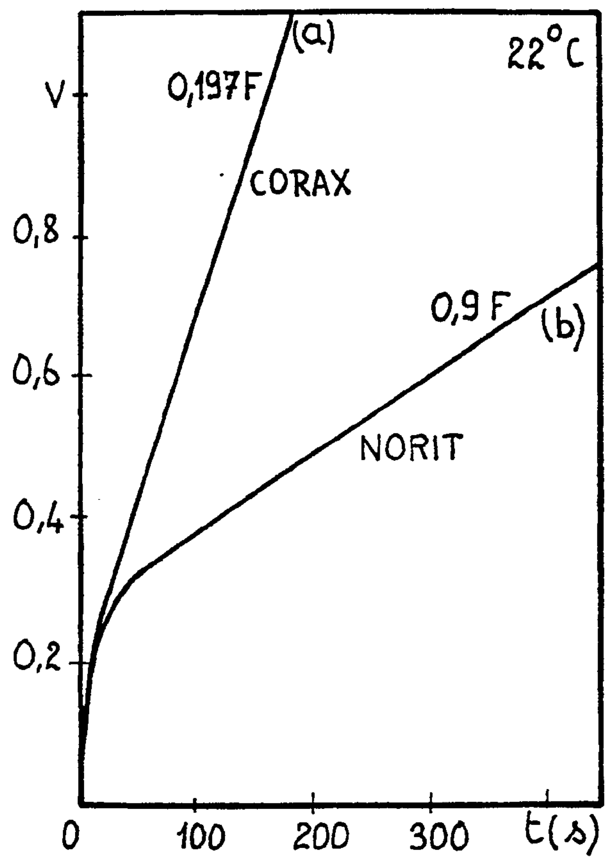
V
0,197F
(a)
22°C
CORAX
0,8
0,6
0,4
0,2
0,9 F
(b)
NORIT
0
100
200
300
t(s)

FIG_6

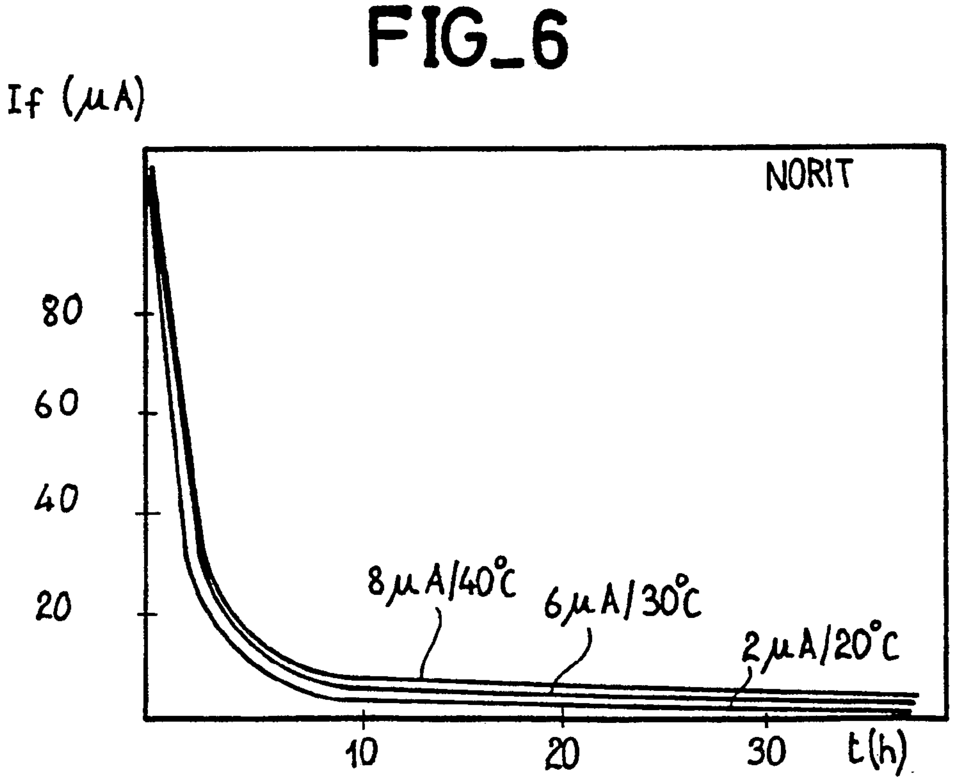
If (μA)
NORIT
80
60
40
20
8μA/40°C
6μA/30°C
2μA/20°C
10
20
30
t(h)

# FIG_5-a

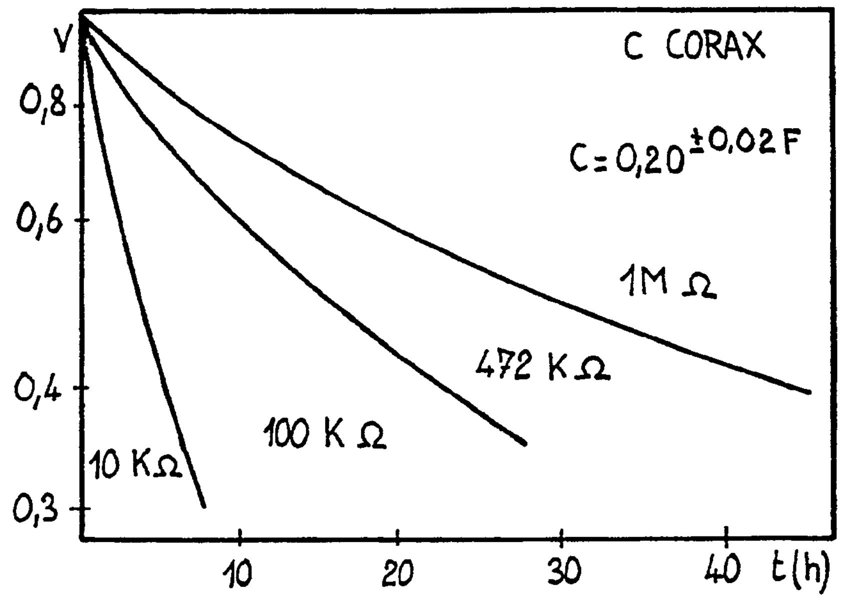
V
0,8
0,6
0,4
0,3
10
20
30
40
t(h)
C CORAX
C=0,20±0,02 F
1M Ω
472 KΩ
100 K Ω
10 KΩ

# FIG_5-b

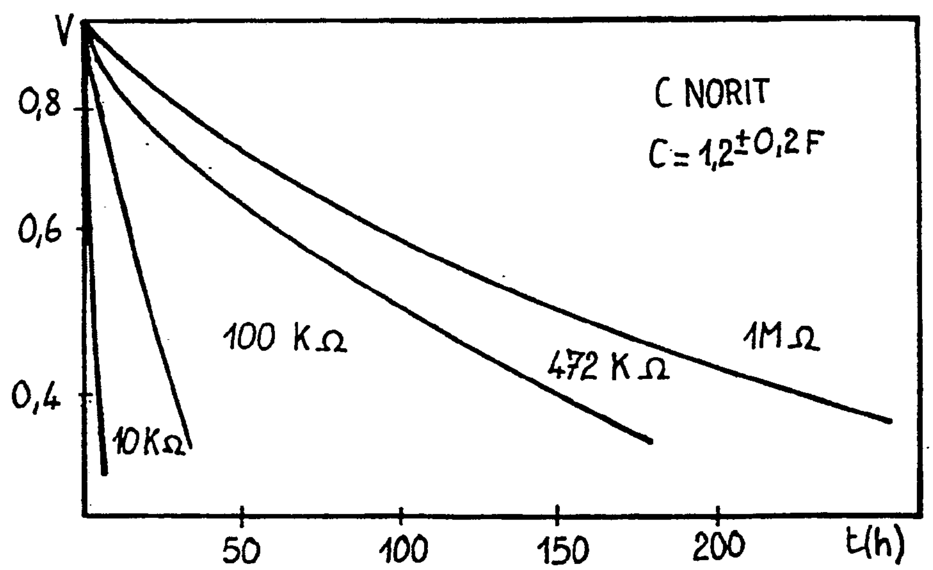
V
0,8
0,6
0,4
50
100
150
200
t(h)
C NORIT
C=1,2±0,2 F
100 KΩ
472 KΩ
1MΩ
10KΩ

FIG_7-a

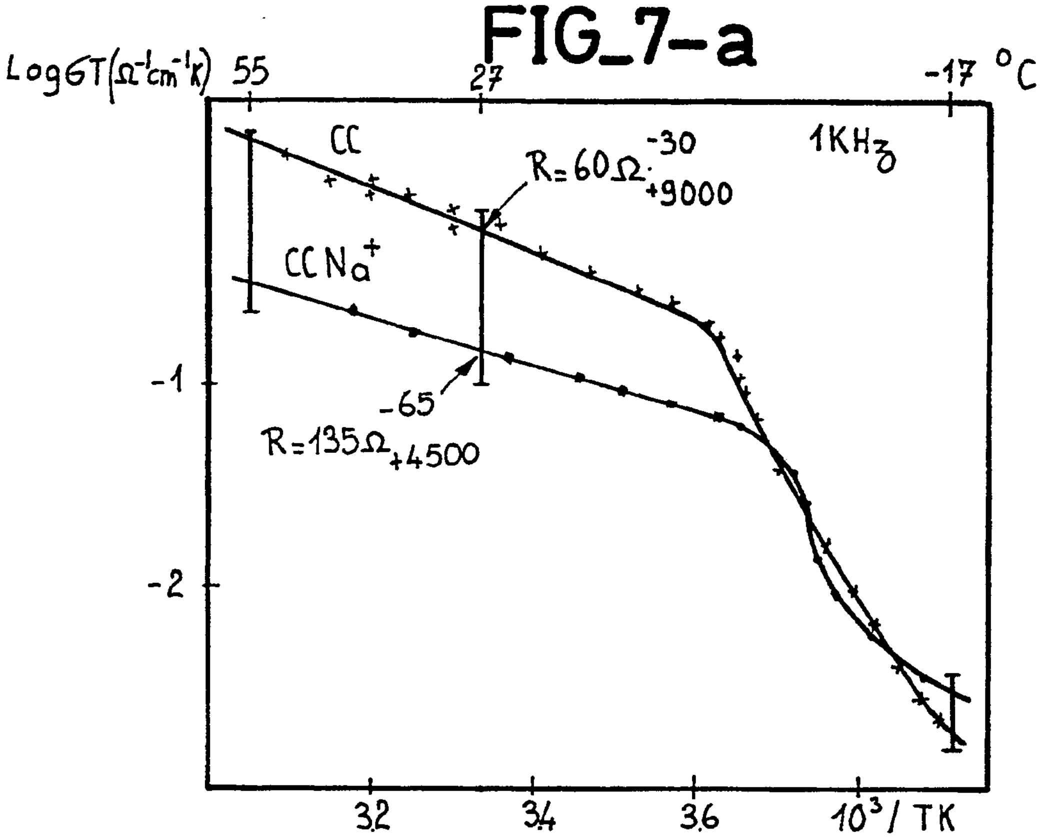
LogσT(Ω⁻¹cm⁻¹K)
55
27
-17 °C
CC
R=60Ω -30 +9000
1KHz
CC Na+
-1
-65
R=135Ω +4500
-2
3.2
3.4
3.6
10³/TK

FIG_7-b

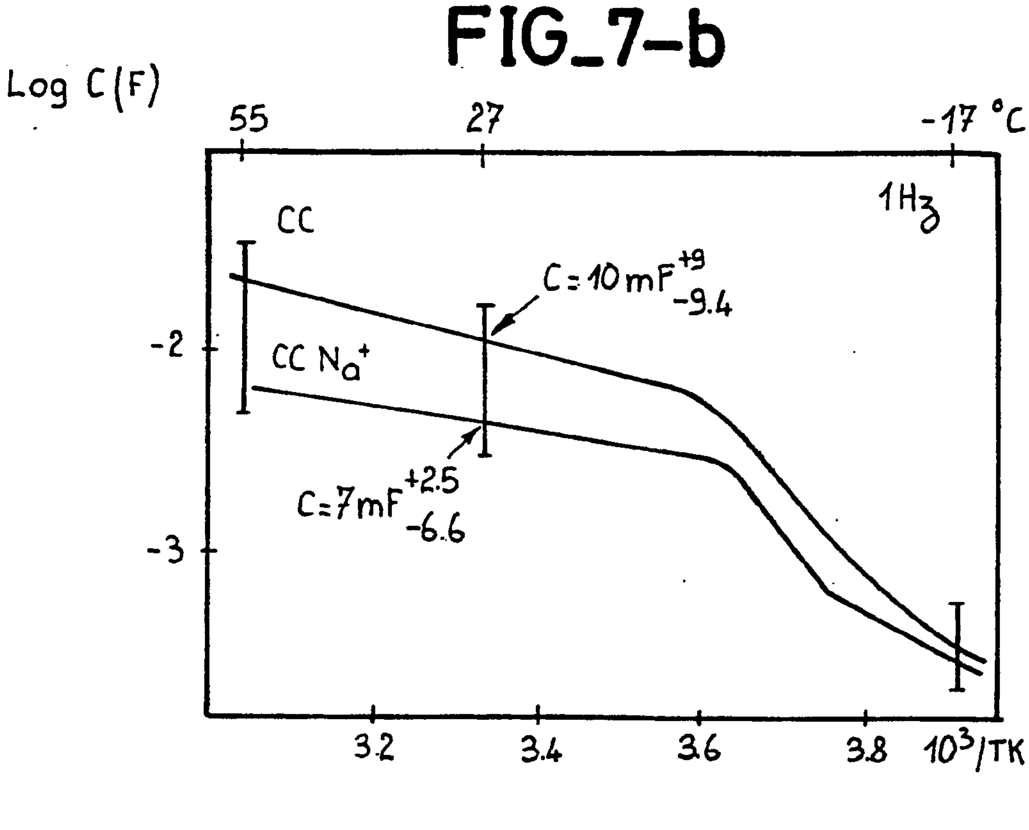
Log C(F)
55
27
-17 °C
1Hz
CC
C=10mF +9 -9.4
-2
CC Na+
C=7mF +2.5 -6.6
-3
3.2
3.4
3.6
3.8
10³/TK